# EUROPÄISCHE PATENTSCHRIFT

(11) **EP 3 230 109 B1**
(45) Veröffentlichungstag und Bekanntmachung des Hinweises auf die Patenterteilung: **22.08.2018**
(21) Anmeldenummer: 15808562.1
(22) Anmeldetag: 08.12.2015
(51) Int. Cl.: B60K 15/073, B60K 15/03, B60K 15/04, B60K 15/05, F02M 37/00

(54) **EINFÜLLSYSTEM AN EINEM KRAFTFAHRZEUG MIT WENIGSTENS ZWEI VORRATSTANKS FÜR FLÜSSIGE ODER GASFÖRMIGE BETRIEBSSTOFFE**
FILLING SYSTEM ON A MOTOR VEHICLE, HAVING AT LEAST TWO STORAGE TANKS FOR LIQUID OR GASEOUS OPERATING MATERIALS
SYSTÈME DE REMPLISSAGE SUR UN VÉHICULE À MOTEUR COMPORTANT AU MOINS DEUX RÉSERVOIRS POUR CARBURANTS LIQUIDES OU GAZEUX

(30) Priorität: 11.12.2014 DE 102014118400
(43) Veröffentlichungstag der Anmeldung: 18.10.2017
(73) Patentinhaber: Kautex Textron GmbH & Co. KG, 53229 Bonn (DE)
(72) Erfinder: EULITZ, Dirk, 53115 Bonn (DE)
(74) Vertreter: Richly & Ritschel Patentanwälte PartG mbB
(86) Internationale Anmeldenummer: PCT/EP2015/078978
(87) Internationale Veröffentlichungsnummer: WO 2016/091875

(56) Entgegenhaltungen:
- WO-A1-2007/042536
- WO-A2-2012/071124
- DE-A1- 10 304 556
- DE-A1-102012 022 129
- DE-A1-102012 023 655
- DE-U1-202010 000 796
- US-A- 4 852 892
- US-A1- 2009 145 903
- US-B1- 6 968 874
- US-B2- 8 382 187

## Beschreibung

Die Erfindung betrifft ein Einfüllsystem an einem Kraftfahrzeug mit wenigstens zwei Vorratstanks für flüssige oder gasförmige Betriebsstoffe, umfassend eine Tankverschlussabdeckung, die eine Öffnung in der Karosserie des Kraftfahrzeuges verschließt und die aus einer ersten, die Öffnung verschließenden Stellung, in eine zweite, die Öffnung freigebene Stellung, verbringbar ist, wobei unterhalb der Tankverschlussabdeckung wenigstens zwei Einfüllöffnungen der Vorratstanks angeordnet sind, die in der ersten Stellung der Tankverschlussabdeckung verdeckt sind, und umfassend eine Einfüllmulde, die eine Einfassung der Einfüllöffnungen bildet, wobei die Einfüllmulde die Öffnung in der Karosserie des Kraftfahrzeuges fahrzeugseitig verschließt und wobei die Einfüllmulde an der Karosserie des Kraftfahrzeuges befestigt ist.

Einfüllsysteme an Kraftfahrzeugen mit Einfüllöffnungen zu verschiedenen Vorratstanks, die unter einer gemeinsamen Tankverschlussabdeckung angeordnet sind, sind grundsätzlich im Stand der Technik bekannt, beispielsweise aus der EP 1 449 702 A2, aus der WO 2006/035013 A1, aus der US 4,852,892 A oder aus der US 2010/0012205 A1.

Beispielsweise das aus der US 4,852,892 A, in der die Merkmale des Oberbegriffs von Anspruch 1 enthalten sind, bekannte Einfüllsystem umfasst bei einer Variante gemäß Figur 3 der Druckschrift einen einzigen Einfüllstutzen mit einer einzigen Einfüllöffnung und zwei Einfüllkanälen, von denen jeder zu einem anderen Kraftstoffbehälter geführt ist.

Insbesondere für Diesel-Personenkraftfahrzeuge haben sich in jüngster Zeit Abgasentstickungssysteme etabliert, insbesondere solche Abgasentstickungssysteme, die auf dem Prinzip der selektiven katalytischen Abgasreduktion mittels einer wässrigen Harnstofflösung beruhen, die in den Abgasstrang des PKW injiziert wird. Hierzu ist es erforderlich, die Harnstofflösung im Kraftfahrzeug zu bevorraten. Tanks zur Aufnahme von Harnstofflösung sind so bemessen und so angeordnet, dass sie bei der Wartung des Fahrzeuges zu den üblichen Inspektionsintervallen werkstattseitig mittels Gebinde gefüllt werden können. Zunehmend wird eine Nachfüllbarkeit der Harnstofftanks durch den Fahrzeughalter gefordert, woraus sich die Notwendigkeit ergibt, einen Einfüllstutzen für ein wässriges Abgasentstickungsadditiv von außen zugänglich am Fahrzeug vorzusehen.

Es ist deshalb grundsätzlich bekannt, neben einem Einfüllstutzen für Kraftstoff wenigstens einen weiteren Einfüllstutzen für die Befüllung eines Nebenflüssigkeitsbehälters, wie beispielsweise eines Additivbehälters unterhalb der Tankverschlussabdeckung des Kraftfahrzeuges anzuordnen.

Technisch problematisch ist der für eine solche gemeinsame Anordnung mehrerer Einfüllstutzen unter einer einzigen Tankverschlussabdeckung innerhalb der Karosserie des Kraftfahrzeuges zur Verfügung stehende Bauraum. Dieser muss einerseits so bemessen sein, dass beide Systeme unter einer Tankverschlussabdeckung angeordnet werden können, andererseits muss die Anordnung der Systeme so bemessen sein, dass etwa auf den Einfüllöffnungen vorgesehene Verschlusskappen noch bedienbar im Sinne von aufschraubbar oder abschraubbar sind. Daraus ergibt sich zwangsläufig, dass die Tankverschlussabdeckung gewisse Ausmaße annimmt, die ästhetisch nicht ansprechend sind. Insbesondere bei Kleinfahrzeugen sind verhältnismäßig groß dimensionierte Tankverschlussabdeckungen stilistisch wenig ansprechend.

Zur Lösung dieses Problems wird in der US 2010/0012205 A1 ein Befüllsystem vorgeschlagen, welches eine erste und eine zweite Einfüllöffnung umfasst, die in eine längs verschiebbare Blende eingesetzt sind. Die Blende ist innerhalb der Karosserie des Kraftfahrzeuges zwischen einer ersten Konfiguration und einer zweiten Konfiguration verschiebbar, wobei in der ersten Konfiguration eine erste Einfüllöffnung fluchtend zu einer feststehenden Öffnung in der Karosserie des Kraftfahrzeuges angeordnet ist und wobei in der zweiten Konfiguration die zweite Einfüllöffnung fluchtend zu dieser Öffnung angeordnet ist. Diese Lösung erfordert einen elektrischen Verstellmechanismus und beansprucht darüber hinaus innerhalb der Karosserie des Kraftfahrzeuges verhältnismäßig viel Bauraum. Zweifellos ist ein Vorzug dieser Anordnung, dass die Öffnung in der Karosserie des Kraftfahrzeuges verhältnismäßig klein ausfallen kann und eine dementsprechend kleine Tankverschlussabdeckung erforderlich ist.

Der Erfindung liegt daher die Aufgabe zugrunde, dass zuvor beschriebene Einfüllsystem an einem Kraftfahrzeug so zu verbessern, dass es bei hinreichender Entsprechung an ästhetische Anforderungen möglichst wenig Bauraum beansprucht und mechanisch verhältnismäßig einfach gestaltet ist.

Die Aufgabe wird gelöst durch die Merkmale des Anspruchs 1. Vorteilhafte Ausgestaltungen der Erfindung ergeben sich aus den Unteransprüchen.

Ein Gesichtspunkt der vorliegenden Erfindung betrifft ein Einfüllsystem an einem Kraftfahrzeug mit wenigstens zwei Vorratstanks für flüssige oder gasförmige Betriebsstoffe, umfassend eine Tankverschlussabdeckung, die eine Öffnung in der Karosserie des Kraftfahrzeuges verschließt und die aus einer ersten, die Öffnung verschließenden Stellung, in eine zweite, die Öffnung freigebende Stellung, verbringbar ist, wobei unterhalb der Tankverschlussabdeckung wenigstens zwei Einfüllöffnungen der Vorratstanks angeordnet sind, die in einer ersten Stellung der Tankverschlussabdeckung verdeckt sind, eine Einfüllmulde, die eine Einfassung der Einfüllöffnungen bildet, wobei die Einfüllmulde die Öffnung in der Karosserie des Kraftfahrzeuges fahrzeugseitig verschließt und wobei die Einfüllmulde an der Karosserie des Kraftfahrzeuges befestigt ist, weiterhin umfassend wenigstens einen Einfüllkopf, wobei die Einfüllöffnungen als Teil des Einfüllkopfs ausgebildet sind, wobei der Einfüllkopf wenigstens zwei in einem gemeinsamen Bauteil zusammengefasste und einstückig miteinander ausgebildete Mundlochstutzen definiert und wobei jeder Mundlochstutzen eine Einfüllöffnung für einen anderen Vorratstank bildet.

Unter Betriebsstoffen im Sinne der Erfindung sind sowohl Kraftstoff, das heißt flüssiger oder gasförmiger Kraftstoff, als auch Additive, Öl, Wasser oder auch Waschflüssigkeiten zu verstehen.

Die Erfindung wird nachstehend insbesondere unter Bezugnahme auf eine Kombination des Kraftstoffbehälters und eines Additivbehälters als Vorratstanks im Sinne der Erfindung beschrieben, gleichwohl ist die Erfindung nicht auf diese spezielle Kombination an Vorratstanks beschränkt. Das der Erfindung zugrunde liegende Problem ergibt sich grundsätzlich immer dann, wenn das Kraftfahrzeug zwei oder mehrere Vorratstanks für verschiedene Betriebsstoffe des Kfz umfasst, die außen an der Karosserie für den Fahrzeugführer im Sinne einer Betankbarkeit zugänglich sein sollen.

Unter einer Einfüllmulde im Sinne der Erfindung ist insbesondere eine Einfassung der Einfüllöffnungen zu verstehen, die neben der Funktion des fahrzeugseitigen Verschließens der Öffnung in der Karosserie des Kraftfahrzeuges auch die Funktion des Toleranzausgleichs zwischen dem Einfüllkopf und der Karosserie des Fahrzeuges übernimmt und die den nicht planmäßigen Eintritt von Flüssigkeit in den von der Karosserie umschlossenen Bauraum verhindert.

Der Einfüllkopf kann dichtend in eine entsprechende Aufnahme der Einfüllmulde eingesetzt sein. Eine entsprechend ausgebildete Öffnung in der Einfüllmulde als Aufnahme für den Einfüllkopf ist zweckmäßigerweise der äußeren Kontur des Einfüllkopfs angepasst. Insbesondere dadurch, dass die Einfüllöffnungen für verschiedene Vorratstanks in einem Einfüllkopf als gemeinsames Bauteil ausgebildet sind, kann der für die Befüllung mehrerer Vorratstanks beanspruchte Bauraum deutlich verkleinert werden. Die Einfüllöffnungen können mit geringst möglichen Abstand zueinander positioniert werden, woraus eine geringst mögliche Bauraumbeanspruchung resultiert.

Die erfindungsgemäße Gestaltung hat darüber hinaus den Vorteil, dass nur eine einzige Karosseriebefestigung beziehungsweise Karosserieanbindung des Einfüllkopfs erforderlich ist.

Zweckmäßigerweise ist der Einfüllkopf aus thermoplastischem Kunststoff hergestellt. Der Einfüllkopf kann beispielsweise aus mehreren spritzgegossenen Bauteilen zusammengefügt sein.

Die Einfüllmulde kann beispielsweise aus einem thermoplastischem Elastomer oder einem anderen verhältnismäßig weichen thermoplastischem Kunststoff ausgebildet sein.

Insbesondere wenn die Einfüllmulde aus einem thermoplastischem Elastomer ausgebildet ist, ist die Anordnung zusätzlicher Dichtmittel im Bereich der Einfassung der Einfüllöffnungen beziehungsweise des Einfüllkopfs und gegebenenfalls im Bereich des Anschlusses der Einfüllmulde an die Karosserie des Kraftfahrzeuges nicht erforderlich.

Der Einfüllkopf kann beispielsweise zwei oder mehrere Abgänge zu den Vorratstanks umfassen, die beispielsweise in Form eines Einfüllrohres für je einen Vorratstanks ausgebildet sind oder an die jeweils ein Einfüllrohr für einen Vorratstank angeschlossen ist. Die Einfüllrohre können aus thermoplastischem Kunststoff, jeweils flexibel oder starr ausgebildet sein und können jeweils an die Abgänge des Einfüllkopfs angeschlossen sein. Beispielsweise können die Einfüllrohre auf die Abgänge des Einfüllkopfs aufgesteckt oder aufgewürgt oder dort mittels Schellen befestigt sein.

Alternativ kann beispielsweise an den Einfüllkopf wenigstens ein Einfüllrohr einstückig angeformt sein.

Bei einer besonders bevorzugten und vorteilhaften Variante des Einfüllsystems gemäß der Erfindung ist vorgesehen, dass der Einfüllkopf zumindest teilweise elektrisch leitfähig ausgebildet ist und elektrisch leitend mit der Karosserie des Kraftfahrzeuges verbunden ist. Eine solche Gestaltung des Einfüllkopfs ist insbesondere deshalb vorteilhaft, weil bei dem Einfüllsystem gemäß der Erfindung sowohl ein von dem Einfüllkopf definierter Einfüllkanal für Kraftstoff als auch ein von dem Einfüllkanal für eine andere Betriebsflüssigkeit elektrisch geerdet sein können. Vorzugsweise besteht wenigstens einer der Einfüllkanäle selbst aus einem elektrisch leitfähig gefüllten Kunststoff.

Dies kann beispielsweise besonders einfach dadurch erreicht werden, dass der aus thermoplastischem Kunststoff ausgebildete Einfüllkopf einen elektrisch leitfähigen Füllstoff umfasst. Der elektrisch leitfähige Füllstoff ist vorzugsweise ausgewählt aus einer Gruppe umfassend Kohlenstoff, Ruß, Kohlefasern, Metallpartikel und Ferritpartikel.

Alternativ oder zusätzlich kann der Einfüllkopf eine Metalleinfassung und/oder einen Metalleinsatz umfassen, die elektrisch leitend mit der Karosserie des Kraftfahrzeuges verbunden sind. Als Metalleinsatz kann beispielsweise eine sogenannte Erdungsspeiche vorgesehen sein, die sich in wenigstens einen Einfüllkanal des Einfüllkopfs erstreckt. Alternativ kann innerhalb wenigstens eines Einfüllkanals ein metallener Trichter vorgesehen sein.

Zweckmäßigerweise ist der Einfüllkopf gemäß der Erfindung an einem tragenden Teil der Karosserie des Kraftfahrzeuges befestigt, wohingegen die Einfüllmulde an der äußeren Karosserie des Kraftfahrzeuges befestigt sein kann.

Bei einer besonders bevorzugten Variante des Einfüllsystems gemäß der Erfindung ist vorgesehen, dass der Einfüllkopf wenigstens einen Verschlussklappenmechanismus umfasst, der wenigstens eine Einfüllöffnung ohne eine Verschlussklappe abdichtet. Diese Systeme werden im Allgemeinen als sogenannte "capless"-Systeme bezeichnet. Dadurch wird eine weitere wesentliche Bauraumeinsparung erzielt, da innerhalb des von der Einfüllmulde umschlossenen Raumes kein zusätzlicher Platz für die Handhabung von Verschlusskappen vorgesehen sein muss. Wenigstens eine Verschlusskappe, beispielsweise die für eine Kraftstoff-Einfüllöffnung wäre bei einem solchen System entbehrlich.

Dann ist es zweckmäßig, wenn der integrierte Verschlussklappenmechanismus elektrisch leitend mit der Karosserie des Kraftfahrzeuges verbunden ist.

Zweckmäßigerweise umfasst der Einfüllkopf einen Einfüllkanal für Kraftstoff und einen Einfüllkanal für ein wässriges Additiv zur selektiven katalytischen Abgasenstickung, wobei der Verschlussklappenmechanismus den Einfüllkanal für Kraftstoff verschließt.

Besonders zweckmäßig ist es, wenn der Verschlussklappenmechanismus elektrisch ver- und entriegelbar und/oder elektrisch und/oder pneumatisch betätigbar ist.

Der Einfüllkopf kann beispielsweise aus einem thermoplastischen Kunststoff mit einer Kohlefaser Füllung bestehen, die anteilsmäßig so bemessen ist, dass sie sowohl eine elektrische Leitfähigkeit des Einfüllkopfs als auch eine Strukturversteifung des Einfüllkopfs herstellt.

Die die Einfüllöffnung bildenden und die Einfüllkanäle jeweils umschließenden Mundlochstutzen sind hinsichtlich ihrer Gestaltung jeweils an den zu befüllenden Betriebsstoff angepasst. So kann ein Mundlochstutzen in üblicher Art und Weise zur Aufnahme eines Zapfventils für Kraftstoff ausgebildet sein, wohingegen der andere Mundlochstutzen zur Aufnahme eines Zapfventils für ein wässriges Additiv zur selektiven katalytischen Abgasenstickung ausgebildet sein kann. Dieser Mundlochstutzen kann außerdem ein Außengewinde zur Aufnahme einer Überwurfverschraubung eines Betankungsgebindes, wie beispielsweise einer sogenannten "Kruseflasche" aufweisen. Der Mundlochstutzen kann zusätzlich einen Magneten zur Freigabe eines Zapfventils umfassen.

Der Einfüllkopf kann weiterhin ein wenigstens ein Schnellentlüftungsventil oder Schnellbelüftungsventil für wenigstens einen Vorratstank umfassen, wobei das Schnellentlüftungsventil oder Schnellbelüftungsventil ein Steuersignal erhält, welches über die Betätigung der Tankverschlussabdeckung oder durch die Aktivierung des Verschlussklappenmechanismus erzeugt wird. Eine solche Schnellentlüftung oder Schnellbelüftung kann beispielsweise dann wünschenswert und vorteilhaft sein, wenn einer der Vorratstanks als Drucktank für ein Hybridfahrzeug ausgebildet ist.

Um die Funktion einer Betankungsabschaltung bei Befüllung eines der Vorratstanks zu gewährleisten, ist es sinnvoll, wenn an dem Einfüllkopf Mittel zur Betätigung eines oder mehrerer Betriebsentlüftungsventile vorgesehen sind. Als Mittel zur Betätigung des Betriebsentlüftungsventils kann beispielsweise ein sich in einen Einfüllkanal erstreckendes Schaltorgan vorgesehen sein. Alternativ kann eine Betätigung über ein Steuersignal erfolgen, dass entweder durch Betätigung des Verschlussklappenmechanismus erzeugt wird oder dass durch eine Betätigung der Tankverschlussabdeckung erzeugt wird.

Die Erfindung wird nachstehend anhand eines in den Zeichnungen dargestellten Ausführungsbeispiels erläutert.

Es zeigen:
- Figur 1:: eine Draufsicht auf die Einfüllmulde des Einfüllsystems gemäß der Erfindung an einem Kraftfahrzeug bei geöffneter Tankverschlussabdeckung,
- Figur 2:: eine Schnittansicht durch die in Figur 1 gezeigte Anordnung bei Betankung,
- Figuren 3a und 3b:: jeweils Ansichten, die einen prinzipiellen Vergleich zwischen einem Einfüllsystem nach dem Stand der Technik und einem Einfüllsystem gemäß der Erfindung veranschaulichen.

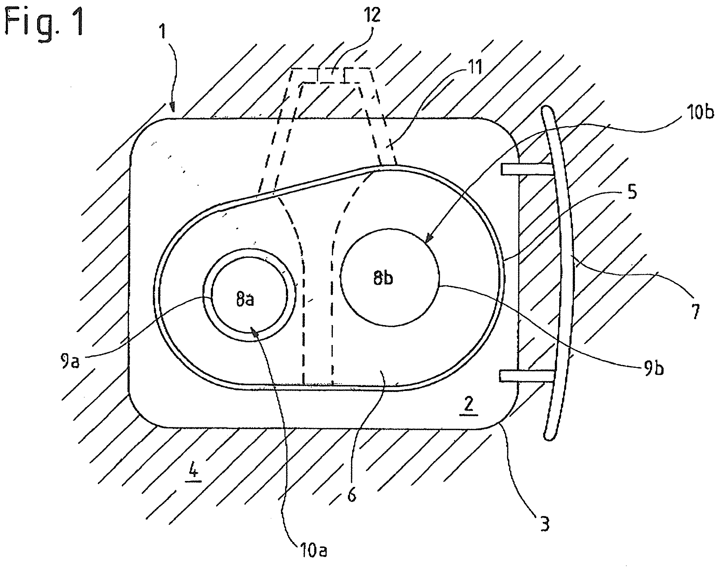

Es wird zunächst Bezug genommen auf die Figur 1, die eine Draufsicht auf die geöffnete Einfüllmulde 2 eines Einfüllsystems 1 gemäß der Erfindung zeigt. Die Einfüllmulde 2 bildet den fahrzeugseitigen Abschluss einer Öffnung 3 in der Karosserie 4 eines Kraftfahrzeuges. Dieser ist beispielsweise aus muldenförmiger Balg aus einem TPE (thermoplastischem Elastomer) ausgebildet. Die Einfüllmulde 2 umfasst eine Öffnung 5, die als Aufnahme für einen Einfüllkopf 6 ausgebildet ist. Die Einfühlmulde 2 ist mittels einer an die Karosserie 4 des Kraftfahrzeuges schwenkbar angelenktem Tankverschlussabdeckung 7 verschließbar.

In der in Figur 1 dargestellten Stellung der Tankverschlussabdeckung 7 ist die Einfüllmulde 2 geöffnet, so dass die Tankverschlussabdeckung 7 zwei Einfüllöffnungen 8a, 8b freigibt, wohingegen die Tankverschlussabdeckung 7 in der einsgeschwenkten Stellung (nicht gezeigt) die Einfüllöffnungen 8a, 8b verdeckt. Die in Figur 1 links dargestellte Einfüllöffnung 8a ist als Einfüllöffnung für ein wässriges Additiv zur selektiven katalytischen Abgasentstickung vorgesehen, wohingegen die in Figur 1 rechts dargestellte Einfüllöffnung 8b als Einfüllöffnung für Kraftstoff vorgesehen ist.

Die Einfüllöffnungen 8a, 8b sind integraler Bestandteil des einstückig aus thermoplastischem Kunststoff ausgebildeten Einfüllkopfs 6.
Jeder der Einfüllöffnungen 8a, 8b umfasst einen Mundlochstutzen 9a, 9b, welcher jeweils eine Einfüllöffnung 8a, 8b begrenzt.

Jede der Einfüllöffnungen 8a, 8b führt in einen Einfüllkanal 10a, 10b.

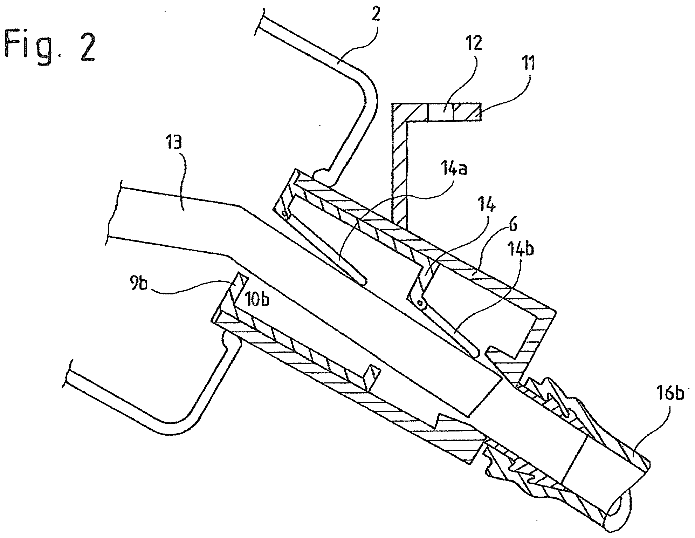

Bei dem in den Figuren dargestellten Einfüllsystem 1 ist dieses hinsichtlich des Einfüllkanals 10b, der als Kraftstoff-Einfüllkanal ausgebildet ist, als sogenanntes "capless"-System ausgebildet, das heißt ohne eine von außen aufschraubbare Verschlusskappe sondern mit einem integrierten Verschlussklappenmechnismus wie dies in Figur 2 dargestellt ist. Die Zeichnung ist hinsichtlich des Verschlussklappenmechanismus stark vereinfacht.

Der Einfüllkopf 6 ist mit einer einstückig angeformten Befestigungsbrücke 11 versehen, die eine oder mehrere Befestigungsbohrungen 12 aufweist, mit welchen der Einfüllkopf 6 an tragenden Teilen der Karosserie 4 des Kraftfahrzeuges befestigt werden kann.

Die Befestigungsbrücke 11 kann ebenso wie der Einfüllkopf 6 aus einem leitfähigen gefüllten thermoplastischen Kunststoff ausgebildet sein, so dass über die Befestigungsbrücke 11 eine leitfähige Anbindung an elektrisch leitfähige Teile der Karosserie 4 des Kraftfahrzeuges erfolgen kann.

Es wird nunmehr Bezug genommen auf die Schnittansicht in Figur 2, welche einen Schnitt durch Teile des Einfüllsystems 1 im Bereich des Einfüllkanals 10b mit in den Einfüllkanal 10b eingesetztem Zapfventil 13 zeigt.

In Figur 2 ist die Anbindung der Einfüllmulde 2 an die Karosserie 4 des Kraftfahrzeuges nicht dargestellt. Im Übrigen sind gleiche Bauteile mit gleichen Bezugszeichen versehen.

Der Einfüllkanal 10b des Einfüllkopfs 6 umschließt einen in diesen eingesetzten Verschlussklappenmechanismus 14, der eine erste und eine zweite Verschlussklappe 14a, 14b umfasst. Die erste und die zweite Verschlussklappe 14a, 14b können elektrisch entriegelbar sein, diese werden dann mechanisch durch das in den Einfüllkanal 10b eingesetzte Zapfventil 13 beispielsweise gegen einen nicht dargestellten Fehlermechanismus geöffnet.

Der Einfüllkopf 6 umfasst weiterhin zwei Abgänge 15a, 15b, an die jeweils Einfüllrohre 16b angeschlossen sind.

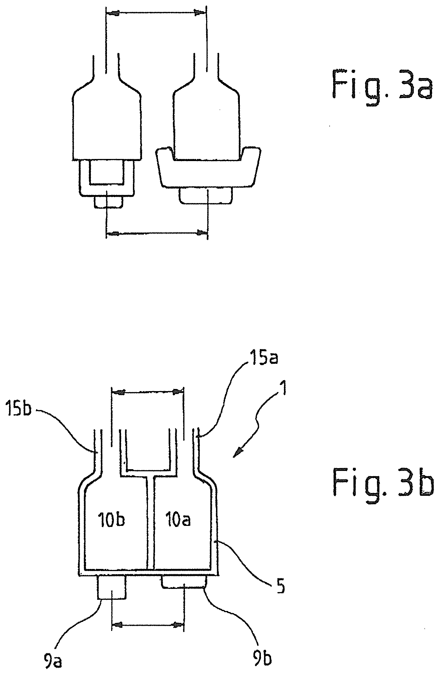

Es wird nunmehr Bezug genommen auf die Figuren 3a und 3b. Die Figuren veranschaulichen prinzipiell den Unterschied zwischen einem Einfüllsystem 1 gemäß der Erfindung (Figur 3b) und einem Einfüllsystem gemäß Stand der Technik (Figur 3a). Bei dem System Stand der Technik ist erkennbar ist erkennbar, dass aufgrund des Umstandes, dass zwei Einfüllköpfe vorgesehen sein müssen, der Abstand zwischen den betreffenden Einfüllöffnungen systembedingt verhältnismäßig groß gewählt sein muss, wohingegen das Einfüllsystem 1 gemäß der Erfindung aufgrund des Umstandes, dass beide Einfüllöffnungen 8a, 8b (siehe Figur 1) als Teil des Einfüllkopfs 6 ausgebildet sind und dass der Einfüllkopf 6 wenigstens zwei in einem gemeinsamen Bauteil zusammengefasste und einstückig miteinander ausgebildete Mundlochstutzen 9a, 9b definiert, wobei jeder Mundlochstutzen 9a, 9b eine Einfüllöffnung 8a, 8b für einen anderen Vorratstank bildet, ersichtlich viel weniger Platz beziehungsweise Bauraum beansprucht. Die Darstellung gemäß der Figuren 3a und 3b ist stark vereinfacht, übliche funktionale Elemente beziehungsweise Bauteile eines Einfüllkopfs sind aus Vereinfachungsgründen dort nicht dargestellt.

### Bezugszeichenliste

- 1: Einfüllsystem
- 2: Einfüllmulde
- 3: Öffnung
- 4: Karosserie
- 5: Öffnung in der Einfüllmulde
- 6: Einfüllkopf
- 7: Tankverschlussabdeckung
- 8a: Einfüllöffnung für Additiv
- 8b: Einfüllöffnung für Kraftstoff
- 9a, 9b: Mundlochstutzen
- 10a, 10b: Einfüllkanal
- 11: Befestigungsbrücke
- 12: Befestigungsbohrung
- 13: Zapfventil
- 14: Verschlussklappeneinsatz
- 14a: erste Verschlussklappe
- 14b: zweite Verschlussklappe
- 15a,15b: Abgänge
- 16b: Einfüllrohr

## Patentansprüche

1. Einfüllsystem (1) an einem Kraftfahrzeug mit wenigstens zwei Vorratstanks für flüssige oder gasförmige Betriebsstoffe, umfassend eine Tankverschlussabdeckung (7), die eine Öffnung (3) in der Karosserie (4) des Kraftfahrzeuges verschließt und die aus einer ersten, die Öffnung (3) verschließenden Stellung, in eine zweite, die Öffnung freigebende Stellung, verbringbar ist, wobei unterhalb der Tankverschlussabdeckung (7) wenigstens zwei Einfüllöffnungen der Vorratstanks angeordnet sind, die in der ersten Stellung der Tankverschlussabdeckung (7) verdeckt sind, und wenigstens einen Einfüllkopf (6), wobei die Einfüllöffnungen als Teil des Einfüllkopfs (6) ausgebildet sind, wobei der Einfüllkopf (6) wenigstens zwei in einem gemeinsamen Bauteil zusammengefasste und einstückig miteinander ausgebildete Mundlochstutzen (9a, 9b) definiert und wobei jeder Mundlochstutzen (9a, 9b) eine Einfüllöffnung für einen anderen Vorratstank bildet, **gekennzeichnet durch** eine Einfüllmulde (2), die eine Einfassung der Einfüllöffnungen bildet, wobei die Einfüllmulde (2) die Öffnung (3) in der Karosserie (4) des Kraftfahrzeuges fahrzeugseitig verschließt und wobei die Einfüllmulde (2) an der Karosserie (4) des Kraftfahrzeuges befestigt ist.

2. Einfüllsystem nach Anspruch 1, **dadurch gekennzeichnet, dass** der Einfüllkopf (6) aus thermoplastischem Kunststoff spritzgegossen ist oder aus spritgegossenen Teilen aus thermoplastischem Kunststoff zusammengefügt ist.

3. Einfüllsystem nach Anspruch 2, **dadurch gekennzeichnet, dass** der Einfüllkopf (6) zumindest teilweise elektrisch leitfähig ausgebildet ist und elektrisch leitend mit der Karosserie (4) des Kraftfahrzeugs verbunden ist.

4. Einfüllsystem nach Anspruch 3, **dadurch gekennzeichnet, dass** der Einfüllkopf (6) aus einem thermoplastischen Kunststoff besteht, der einen elektrisch leitfähigen Füllstoff umfasst.

5. Einfüllsystem nach einem der Ansprüche 3 oder 4, **dadurch gekennzeichnet, dass** der Einfüllkopf (6) eine Metalleinfassung und/oder einen Metalleinsatz umfasst, die elektrisch leitend mit der Karosserie (4) des Kraftfahrzeuges verbunden sind.

6. Einfüllsystem nach einem der Ansprüche 1 bis 5, **dadurch gekennzeichnet, dass** der Einfüllkopf (6) an der Karosserie (4) des Kraftfahrzeuges befestigt ist.

7. Einfüllsystem nach einem der Ansprüche 1 bis 6, **dadurch gekennzeichnet, dass** die Einfüllmulde (2) aus einem thermoplastischen Elastomer besteht.

8. Einfüllsystem nach einem der Ansprüche 1 bis 7, **dadurch gekennzeichnet, dass** der Einfüllkopf (6) wenigstens einen Verschlussklappenmechanismus umfasst, der wenigstens eine Einfüllöffnung ohne eine Verschlusskappe abdichtet.

9. Einfüllsystem nach Anspruch 8, **dadurch gekennzeichnet, dass** der Verschlussklappenmechanismus elektrisch leitend mit der Karosserie (4) des Kraftfahrzeuges verbunden ist.

10. Einfüllsystem nach einem der Ansprüche 1 bis 9, **dadurch gekennzeichnet, dass** der Einfüllkopf (6) einen Einfüllkanal (10a, 10b) für Kraftstoff und einen Einfüllkanal (10a, 10b) für ein wässriges Additiv zur selektiven katalytischen Abgasentstickung aufweist.

11. Einfüllsystem nach einem der Ansprüche 1 bis 9, **dadurch gekennzeichnet, dass** der Einfüllkopf (6) einen Einfüllkanal (10a, 10b) für Kraftstoff und einen Einfüllkanal (10a, 10b) für Wasser aufweist.

12. Einfüllsystem nach Anspruch 10 oder 11, soweit diese sich auf einen der Ansprüche 8 oder 9 beziehen, **dadurch gekennzeichnet, dass** der Verschlussklappenmechanismus den Einfüllkanal (10a, 10b) für Kraftstoff verschließt.

13. Einfüllsystem nach einem der Ansprüche 8 bis 12, **dadurch gekennzeichnet, dass** der Verschlussklappenmechanismus elektrisch ver- und entriegelbar oder elektrisch und/oder pneumatisch betätigbar ist.

## Claims

1. A filling system (1) on a motor vehicle, having at least two storage tanks for liquid or gaseous operating materials, comprising a tank closure cover (7) which closes an opening (3) in the body (4) of the motor vehicle and can be brought from a first position which closes the opening (3) into a second position which releases the opening, wherein at least two filling openings of the storage tanks are arranged below the tank closure cover (7) and are concealed in the first position of the tank closure cover (7), and at least one filler head (6), wherein the filling openings are formed as part of the filler head (6), wherein the filler head (6) defines at least two mouthpiece necks (9a, 9b) which are combined to form a common component and are integrally connected to each other, and wherein each mouthpiece neck (9a, 9b) forms a filling opening for a different storage tank, **characterized by** a filler dish which forms a surround of the filling opening, wherein the filler dish closes the opening (3) in the body (4) of the motor vehicle on the vehicle side and wherein the filler dish is fixed to the body (4) of the motor vehicle.

2. The filling system as claimed in claim 1, **characterized in that** the filler head (6) is injection-molded from thermoplastic material or is assembled from injection-molded components of thermoplastic material.

3. The filling system as claimed in claim 2, **characterized in that** the filler head (6) is formed at least partially electrically conductive, and is connected electrically conductively to the body (4) of the vehicle.

4. The filling system as claimed in claim 3, **characterized in that** the filler head (6) consists of a thermoplastic material which comprises an electrically conductive filler.

5. The filling system as claimed in one of claims 3 or 4, **characterized in that** the filler head (6) has a metal surround and/or a metal insert which is connected electrically conductively to the body (4) of the motor vehicle.

6. The filling system as claimed in any of claims 1 to 5, **characterized in that** the filler head (6) is fixed to the body (4) of the motor vehicle.

7. The filling system as claimed in any of claims 1 to 6, **characterized in that** the filler dish consists of a thermoplastic elastomer.

8. The filling system as claimed in any of claims 1 to 7, **characterized in that** the filler head (6) comprises at least one closure flap mechanism which seals at least one filling opening without a filler cap.

9. The filling system as claimed in claim 8, **characterized in that** the closure flap mechanism is connected electrically conductively to the body (4) of the motor vehicle.

10. The filling system as claimed in any of claims 1 to 9, **characterized in that** the filler head (6) has a filling channel (10a, 10b) for fuel and a filling channel (10a, 10b) for a watery additive for selective catalytic exhaust gas denitrification.

11. The filling system as claimed in any of claims 1 to 9, **characterized in that** the filler head (6) has a filling channel (10a, 10b) for fuel and a filling channel (10a, 10b) for water.

12. The filling system as claimed in one claims 10 or 11, **characterized in that** the closure flap mechanism closes the filling channel for fuel.

13. The filling system as claimed in any of claims 8 to 12, **characterized in that** the closure flap mechanism can be locked and unlocked electrically, or can be actuated electrically and/or pneumatically.

## Revendications

1. Système de remplissage (1) pour un véhicule automobile, comprenant au moins deux réservoirs pour des carburants liquides ou gazeux, comprenant un couvercle de fermeture de réservoir (7) qui ferme une ouverture (3) dans la carrosserie (4) du véhicule automobile et qui peut être amené d'une première position fermant l'ouverture (3) à une deuxième position libérant l'ouverture, au moins deux ouvertures de remplissage du réservoir étant disposées en dessous du couvercle de fermeture de réservoir (7), lesquelles sont couvertes par le couvercle de fermeture de réservoir (7) dans la première position,
et au moins une tête de remplissage (6), les ouvertures de remplissage étant réalisées en tant que parties de la tête de remplissage (6), la tête de remplissage (6) définissant au moins deux tubulures d'embouchure (9a, 9b) réunies dans un composant commun et réalisées d'une seule pièce l'une avec l'autre, et chaque tubulure d'embouchure (9a, 9b) formant une ouverture de remplissage pour un autre réservoir,
**caractérisé par** un creux de remplissage (2) qui forme une bordure pour les ouvertures de remplissage, le creux de remplissage (2) fermant l'ouverture (3) dans la carrosserie (4) du véhicule automobile du côté du véhicule, et le creux de remplissage (2) étant fixé à la carrosserie (4) du véhicule automobile.

2. Système de remplissage selon la revendication 1, **caractérisé en ce que** la tête de remplissage (6) est moulée par injection de plastique thermoplastique ou est assemblée à partir de pièces moulées par injection en plastique thermoplastique.

3. Système de remplissage selon la revendication 2, **caractérisé en ce que** la tête de remplissage (6) est réalisée au moins en partie de manière électriquement conductrice et est connecté de manière électriquement conductrice à la carrosserie (4) du véhicule automobile.

4. Système de remplissage selon la revendication 3, **caractérisé en ce que** la tête de remplissage (6) se compose d'un plastique thermoplastique qui comprend une charge électriquement conductrice.

5. Système de remplissage selon l'une quelconque des revendications 3 ou 4, **caractérisé en ce que** la tête de remplissage (6) comprend un rebord métallique et/ou un insert métallique qui sont connectés de manière électriquement conductrice à la carrosserie (4) du véhicule automobile.

6. Système de remplissage selon l'une quelconque des revendications 1 à 5, **caractérisé en ce que** la tête de remplissage (6) est fixée à la carrosserie (4) du véhicule automobile.

7. Système de remplissage selon l'une quelconque des revendications 1 à 6, **caractérisé en ce que** le creux de remplissage (2) se compose d'un élastomère thermoplastique.

8. Système de remplissage selon l'une quelconque des revendications 1 à 7, **caractérisé en ce que** la tête de remplissage (6) comprend au moins un mécanisme à clapet de fermeture qui étanchéifie au moins une ouverture de remplissage sans capuchon de fermeture.

9. Système de remplissage selon la revendication 8, **caractérisé en ce que** le mécanisme de clapet de fermeture est connecté de manière électriquement conductrice à la carrosserie (4) du véhicule automobile.

10. Système de remplissage selon l'une quelconque des revendications 1 à 9, **caractérisé en ce que** la tête de remplissage (6) présente un canal de remplissage (10a, 10b) pour du carburant et un canal de remplissage (10a, 10b) pour un additif aqueux pour la dénitrification catalytique sélective des gaz d'échappement.

11. Système de remplissage selon l'une quelconque des revendications 1 à 9, **caractérisé en ce que** la tête de remplissage (6) présente un canal de remplissage (10a, 10b) pour du carburant et un canal de remplissage (10a, 10b) pour de l'eau.

12. Système de remplissage selon la revendication 10 ou 11, dans la mesure où elles se rapportent à l'une des revendications 8 ou 9, **caractérisé en ce que** le mécanisme de clapet de fermeture ferme le canal de remplissage (10a, 10b) pour le carburant.

13. Système de remplissage selon l'une quelconque des revendications 8 à 12, **caractérisé en ce que** le mécanisme de clapet de fermeture peut être verrouillé et déverrouillé électriquement ou peut être actionné électriquement et/ou pneumatiquement.
